(19) Europäisches Patentamt
European Patent Office
Office européen des brevets

(11) **EP 2 641 073 B1**

(12) **FASCICULE DE BREVET EUROPEEN**

(45) Date de publication et mention
de la délivrance du brevet:
**23.05.2018 Bulletin 2018/21**

(21) Numéro de dépôt: **11785647.6**

(22) Date de dépôt: **15.11.2011**

(51) Int Cl.:
*G01M 15/04* *(2006.01)*  *G01M 15/11* *(2006.01)*

(86) Numéro de dépôt international:
**PCT/EP2011/070090**

(87) Numéro de publication internationale:
**WO 2012/065964 (24.05.2012 Gazette 2012/21)**

(54) **PROCEDE DE DETECTION DES DEFAUTS DE COMBUSTION D'UN MOTEUR A COMBUSTION INTERNE**

VERFAHREN ZUR ERKENNUNG VON VERBRENNUNGSDEFEKTEN BEI EINEM VERBRENNUNGSMOTOR

METHOD FOR DETECTING COMBUSTION DEFECTS IN AN INTERNAL COMBUSTION ENGINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.11.2010 FR 1059407**

(43) Date de publication de la demande:
**25.09.2013 Bulletin 2013/39**

(73) Titulaire: **Renault S.A.S.**
**92100 Boulogne-Billancourt (FR)**

(72) Inventeurs:
• **PROTIN, Nicolas**
  **F-78000 Versailles (FR)**
• **LEPORCQ, Michel**
  **F-91390 Morsang sur Orge (FR)**
• **VALADIE, Pierre**
  **F-92190 Meudon (FR)**

(56) Documents cités:
**FR-A1- 2 757 632    FR-A1- 2 768 179**

## Description

La présente invention concerne un procédé de détection des défauts de combustion d'un moteur à combustion interne.

L'OBD (ou On Board Diagnostics en langue anglaise, autrement dit les diagnostics embarqués) est le terme législatif se référant aux capacités de diagnostics matériels qui sont de nos jours embarquées dans la majorité des véhicules à moteur thermique.

L'OBD décrit les moyens à mettre en oeuvre pour contrôler l'ensemble des composants du groupe motopropulseur impactant les émissions polluantes du véhicule tout au long de sa vie.

La réglementation OBD exige la surveillance des défauts de combustion qui peuvent entraîner le dépassement des seuils OBD, et qui peuvent entraîner la dégradation du catalyseur de post-traitement des gaz d'échappement.

Il est connu, tel que décrit dans les documents FR 2 684 425, FR 2 851 612 et EP 0 532 419, FR2768179 et FR2757632, d'estimer les défauts de combustion à l'aide d'une technique basée sur la détection du couple gaz.

On se reportera à ces documents pour une définition des techniques de calcul du couple gaz. Particulièrement, dans le document EP 0 532 419, il a été décrit un dispositif pour produire une valeur Cg, représentative du couple gaz moyen engendré par chaque combustion du mélange gazeux dans le ou les cylindres d'un moteur thermique à combustion interne. Ce dispositif comprend :

- des repères de mesure disposés sur une couronne solidaire du volant d'inertie du moteur ou solidaire du vilebrequin ;
- des moyens pour définir une référence d'indexation par tour de volant ou par tour d'arbre à cames pour les repères ;
- un capteur de défilement des repères, monté fixe au voisinage de la couronne ;
- des moyens pour produire une valeur primaire représentative de la durée de défilement de chacun des repères devant le capteur ;
- des moyens pour traiter cette valeur primaire et ainsi produire deux valeurs secondaires respectivement représentatives de la vitesse angulaire moyenne Wm sur des repères au cours d'une période des combustions dans le moteur et, pour la même période de combustion, de la projection Ecos (F), sur la ligne de référence de phase, des groupes de repères respectivement afférents aux combustions dans les différents cylindres du moteur, de la composante alternative E de la vitesse angulaire instantanée W1 des repères, à la fréquence des combustions dans le moteur ;
- des moyens pour combiner ces deux valeurs secondaires, suivant une relation

$$Cg = -a. Wm. Ecos (F) + b. W12$$

et ainsi produire la valeur recherchée, les termes a et b étant des constantes déterminées expérimentalement.

Dans le document FR 2 757 945, il est défini un procédé de mesure d'un couple gaz qui utilise un dispositif comprenant une cible en forme de couronne, solidaire du volant d'inertie du moteur ou du vilebrequin et dotée de repères sur sa circonférence, des dents par exemple, défilant devant un capteur fixe,

La valeur instantanée de la période de défilement des dents devant le capteur correspond à la mesure de la puissance instantanée produite dans chacun des cylindres du moteur successivement. Des moyens électroniques de calcul utilisent le signal délivré par le capteur pour calculer le couple gaz moyen Cg produit par chaque combustion du mélange gazeux dans chacun des cylindres du moteur.

Dans le cas particulier d'un moteur à essence à quatre cylindres et à quatre temps fonctionnant suivant le cycle de Beau de Rochas, chacun des quatre temps du cycle - admission, compression, combustion-détente, échappement - se produit au cours d'un demi-tour particulier du volant d'inertie solidaire du vilebrequin du moteur. L'énergie cinétique acquise par le système concerné, soit le vilebrequin et le volant avec des masses alternatives, est le résultat des différents couples instantanés négatifs et positifs exercés sur lui pendant chacun des différents temps du cycle de fonctionnement du moteur. On calcule le couple gaz Cg à chaque demi-tour. Ce couple est engendré pendant ces phases de compression et de combustion-détente des mélanges gazeux respectivement emprisonnés dans deux cylindres à combustions contiguës (1 et 4, 2 et 3). Les deux autres cylindres sont alors en phases d'admission et d'échappement. Les phases de compression étant moins sujettes à des variations ou à des dispersions que les phases de combustion-détente, on considère que le couple gaz Cg calculé sur un demi-tour est relatif au cylindre en combustion et donc qu'il est une estimation du couple gaz moyen sur les deux phases, compression et combustion-détente, du même cylindre emprisonnant donc le même mélange gazeux.

A titre d'exemple, la cible comporte, sur sa périphérie, 57 dents identiques régulièrement espacées et formées chacune par un créneau et un creux, et une dent de référence, de plus grande largeur équivalant à trois autres dents, servant d'origine d'indexation pour permettre la numérotation desdites dents. Pour un moteur à quatre temps et quatre cylindres, la période angulaire T des combustions concerne 30 dents et est égale à la moitié de la période de rotation du vilebrequin. Pour un moteur à quatre temps et six cylindres, la période angulaire des combustions T ne concerne plus que 20 dents, etc.

Le capteur fixe peut être à réluctance variable, adapté à délivrer un signal alternatif de fréquence proportionnelle à la vitesse de défilement des dents de la couronne, c'est-à-dire proportionnelle à la vitesse instantanée du volant d'inertie.

Un procédé de détection de défauts de combustion utilisant le couple gaz est décrit dans le document FR 2 844 301.

Or, dans certaines conditions de fonctionnement du moteur ou lors de la présence de défaillances causant des ratés de combustion, l'estimation du couple peut être perturbée et perdre alors en précision. De plus, l'estimation du couple peut s'avérer peu robuste en fonction de la qualité du vilebrequin et du capteur permettant d'estimer le régime. Par conséquent, la fiabilité de ce procédé, directement liée à celle de l'estimation du couple, peut s'avérer insuffisante.

L'invention a pour objectif de remédier à ces inconvénients.

L'invention a ainsi pour objet un procédé de détection des défauts de combustion survenant dans au moins un cylindre d'un moteur à combustion interne, lors d'au moins un cycle de combustion, le procédé opérant par analyse des valeurs d'une grandeur représentative du couple gaz déduite de la rotation du vilebrequin.

Dans le procédé selon l'invention, l'analyse desdites valeurs est effectuée à partir de valeurs filtrées du couple gaz, lorsqu'un fonctionnement stabilisé du moteur est établi.

Ainsi, l'établissement d'un fonctionnement stabilisé du moteur permet d'écarter les valeurs de couple gaz non fiables.

L'établissement d'un fonctionnement stabilisé peut être effectué en fonction du régime moteur et/ou du remplissage en air du moteur.

Un fonctionnement stabilisé peut être établi pour un cycle de combustion donné lorsque la variation du régime moteur et/ou du remplissage en air du moteur par rapport au cycle précédent est inférieure à une valeur seuil.

Lorsqu'un fonctionnement stabilisé du moteur n'est pas établi, l'analyse des valeurs de couple gaz peut être stoppée jusqu'à ce qu'un fonctionnement stabilisé du moteur soit à nouveau établi.

Les valeurs filtrées du couple gaz peuvent être obtenues par un filtrage du premier ordre.

L'analyse des valeurs de couple gaz peut consister à :

(a) générer une valeur représentative $Cg,n,i$ d'une grandeur $Cg$ représentative du couple gaz déduite de la rotation du vilebrequin;

(b) produire une première valeur de seuil supérieur (H) et une seconde valeur de seuil inférieur (B), les dites première (H) et seconde (B) valeurs de seuil étant relatives au cylindre #i et au cycle #n;

(c) détecter lors d'un premier test si la dite valeur représentative $Cg,n,i$ du couple gaz est inférieure à la dite seconde valeur de seuil inférieur (B), de sorte que si le premier test est positif, soit produit un signal de détection d'un raté de combustion;

(d) si le premier test est négatif, détecter lors d'un second test si ladite valeur représentative $Cg,n,i$ du couple gaz est inférieure à la dite première valeur de seuil supérieur (H), de sorte que si le second test est positif, soit produit un signal d'inhibition de la détection des ratés de combustion; et

(e) si le second test est négatif, produire un signal d'absence de détection d'un raté de combustion.

Pour un moteur à quatre cylindres, l'analyse des valeurs de couple gaz peut comprendre l'analyse des trois différences de couple gaz suivantes, un défaut de combustion étant détecté si l'une au moins de ces différences dépasse une valeur seuil :

- une première différence, égale, pour un point mort haut donné, à la différence entre la valeur du couple gaz filtrée deux points morts hauts avant le point mort haut donné et la valeur du couple gaz filtrée au point mort haut donné,
- une deuxième différence, égale, pour un point mort haut donné, à la différence entre 1) la somme de la valeur du couple gaz filtrée et de la valeur du couple gaz filtrée deux points morts hauts avant le point mort haut donné, et 2) la somme de la valeur du couple gaz filtrée un point mort haut avant le point mort haut donné et de la valeur du couple gaz filtrée trois points morts hauts avant le point mort haut donné,
- une troisième différence, égale, pour un point mort haut donné, à la différence entre la dernière valeur du couple gaz filtrée avant un défaut de combustion détecté, et la valeur du couple gaz non filtré.

Pour un moteur à trois cylindres, l'analyse des valeurs de couple gaz peut comprendre l'analyse des deux différences de couple gaz suivantes, un défaut de combustion étant détecté si l'une au moins de ces différences dépasse une valeur seuil :

- une première différence, égale, pour un point mort haut donné, à la différence entre la valeur du couple gaz filtrée un point mort haut avant le point mort haut donné et la valeur du couple gaz filtrée au point mort haut donné,
- une deuxième différence, égale, pour un point mort haut donné, à la différence entre la dernière valeur du couple gaz filtrée avant un défaut de combustion détecté et la valeur du couple gaz non filtrée au point mort haut donné.

D'autres caractéristiques et avantages de la présente invention apparaîtront plus clairement à la lecture de la description suivante, donnée à titre d'exemple illustratif et non limitatif et faite en référence aux dessins annexés sur lesquels ;

- la figure 1 illustre schématiquement un système à moteur à combustion interne soumis au procédé selon l'invention,
- la figure 2 est une vue partielle du volant moteur,
- la figure 3 est un organigramme illustrant différentes étapes d'un procédé selon l'invention, et
- la figure 4 est un diagramme utile à la compréhension de l'invention.

Dans la suite de la description, on appellera cycle moteur, pour un moteur à combustion interne quatre temps, le temps mis par le vilebrequin pour faire deux tours.

On appellera PMH le temps mis par le vilebrequin pour faire un demi-tour de vilebrequin pour un moteur équipé de quatre cylindres, et deux tiers de tour de vilebrequin pour un moteur équipé de trois cylindres.

L'estimation du couple gaz sera nommée C_BRUT.

La valeur filtrée du couple gaz sera nommée C_FILTRE.

La valeur du couple gaz bloquée à la dernière valeur sans raté de combustion sera nommée C_BLOQUE.

L'estimation du couple gaz, n PMH avant l'instant présent, sera nommée C_BRUT_n.

L'estimation du couple gaz filtré, n PMH avant l'instant présent, sera nommée C_FILTRE_n.

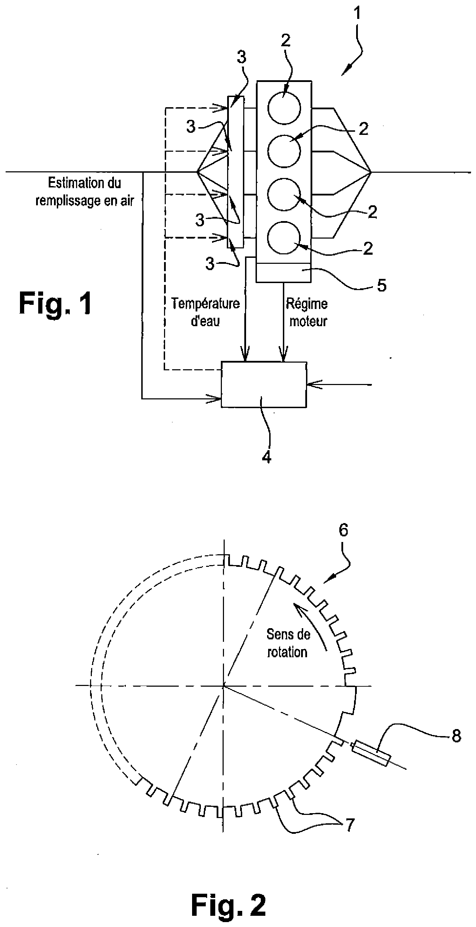

Le procédé selon l'invention peut s'appliquer à un système 1 à moteur à combustion interne tel qu'illustré à la figure 1.

Le moteur peut comprendre trois ou quatre cylindres, chaque cylindre étant associé à une bougie 2 et à un injecteur 3. L'injection illustrée est indirecte, mais elle pourrait aussi être directe. Un calculateur 4 permet de commander les injecteurs 3.

Le système 1 comprend également des moyens de mesure ou d'estimation du remplissage en air du moteur, par exemple à partir de la température et de la pression de l'air en amont des cylindres, ainsi que des moyens 5 de mesure ou d'estimation du régime moteur.

La figure 2 illustre une couronne 6 solidaire du vilebrequin ou du volant d'inertie du moteur appelés « cible ». L'estimation du régime moteur peut être réalisée avec :

- les dents 7 de la couronne 6, qui sont des repères de mesure,
- des moyens pour définir une référence d'indexation par tour de volant ou par tour d'arbre à cames pour les repères 7.
- un capteur 8 de défilement des repères 7, monté fixe au voisinage de la couronne 6.

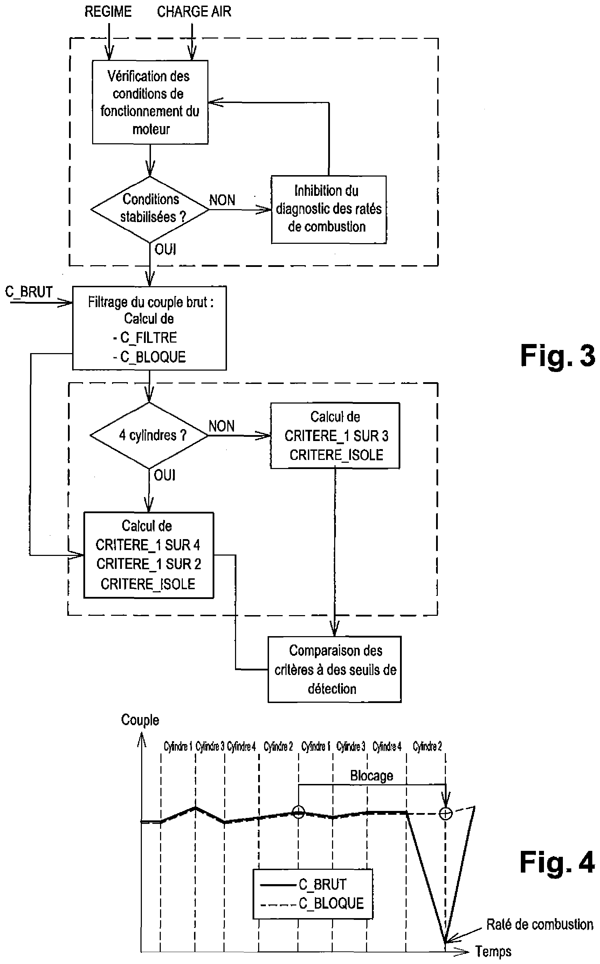

L'organigramme de la figure 3 indique les différentes étapes d'un mode de réalisation du procédé selon l'invention.

Dans une première étape, appelée étape de filtrage, on vérifie le fonctionnement du moteur, s'il est en mode stabilisé ou en mode transitoire, on applique un filtre sur le couple gaz lorsque le moteur est stabilisé, puis on calcule une valeur dite « bloquée » du couple gaz.

Dans une deuxième étape, on calcule les critères du diagnostic.

Le filtrage du couple est la somme de plusieurs fonctionnalités :

- l'inhibition du diagnostic lorsque les valeurs de couple estimées ne sont pas fiables,
- un filtrage de type filtre de premier ordre,
- le calcul du dernier couple gaz sans raté de combustion.

Dans certaines conditions de fonctionnement du moteur, la variation de couple gaz n'est pas due à une défaillance technique. L'intérêt du filtrage réside dans le fait de repérer les types de fonctionnement moteur qui font varier la valeur de couple gaz, pour ensuite les isoler dans le but de ne pas prendre de décision et donc de fiabiliser le diagnostic. Par exemple, des variations de couple gaz peuvent être induites par un mauvais état de la route (présence de nids de poule par exemple). En effet, les vibrations qu'entraînent le mauvais état de la route sont transmises de la roue du véhicule jusqu'au vilebrequin par l'intermédiaire de la transmission et perturbent la fiabilité de l'estimation du couple gaz. Le couple gaz varie alors de manière caractéristique, permettant d'inhiber le diagnostic là où l'estimation du couple gaz n'est plus fiable.

Pour réaliser cette opération, on a besoin en entrée de deux variables permettant de caractériser la vitesse de rotation du vilebrequin (REGIME) et le remplissage en air du moteur (CHARGE_AIR). La variation des conditions de fonctionnement du moteur sera détectée grâce à ces deux variables.

Concrètement, lorsque, pour chaque cylindre, la variation du REGIME ou CHARGE_AIR par rapport au cycle précédent excède un seuil de détection calibrable, alors un booléen indiquant une phase de fonctionnement transitoire du moteur désactive le diagnostic jusqu'à ce que le fonctionnement du moteur se stabilise.

Dans le cas contraire, où le fonctionnement du moteur est stabilisé, un filtre du premier ordre est appliqué sur la variation de couple d'un cycle à un autre sur chaque cylindre. Ce filtrage de couple permet de diminuer la dispersion de mesure lors de la comparaison des couples entre les cylindres. La grandeur de référence utilisée pour la détection des ratés de combustion est donc plus stable après filtrage, ce qui améliore la performance de la détection.

On calcule le couple filtré de la manière suivante :

$$C\_FILTRE = C\_FILTRE\_N + (C\_BRUT - C\_FILTRE\_N) * K,$$

K étant le coefficient de filtrage compris entre 0 et 1. Plus K est proche de 1 et moins le couple est filtré et inversement, N étant le nombre de cylindres.

Les critères de détection pour un moteur équipés de 4 cylindres sont les suivants :

- un critère, que l'on nommera CRITERE_1sur4 permettant de détecter des ratés de combustion intervenant tous les 4 PMH (c'est-à-dire de manière permanente sur un des cylindres), causés par l'absence d'allumage ou d'injection sur un des cylindres (par exemple : bougie d'allumage défaillante, injecteur bouché),
- un critère, que l'on nommera CRITERE_1sur2, permettant de détecter des ratés de combustion intervenant tous les 2 PMH, (c'est à dire de manière permanente sur deux des cylindres), causés par l'absence d'allumage sur deux des cylindres (par exemple : bobine d'allumage défaillante pour un allumage de type jumeau statique avec une bobine par paire de cylindres).

Ces deux critères ont été développés à partir de l'analyse des modes de défaillance d'un moteur équipé de quatre cylindres.

Le critère de détection pour un moteur équipé de 3 cylindres est le suivant :

- un critère, que l'on nommera CRITERE_1sur3, permettant de détecter des ratés de combustion intervenant tous les 3 PMH (c'est à dire de manière permanente sur un des cylindres), causés par l'absence d'allumage ou d'injection sur un des cylindres (par exemple : bougie d'allumage défaillante, injecteur bouché).

Il existe également un critère commun à tout type de moteur, ce critère sera nommé CRITERE_ISOLE, il permettra de détecter les ratés de combustion se produisant occasionnellement sur l'un des cylindres.

Pour le déterminer, on calcule C_BLOQUE de la manière suivante : dès qu'un raté de combustion intervient sur l'un des cylindres, C_BLOQUE devient égal à la dernière valeur caractéristique d'une combustion normale sur le même point de fonctionnement (caractérisé par REGIME et CHARGE_AIR). Si les ratés de combustion sont permanents sur un cylindre, ce critère n'est pas calculé.

Ainsi, avec un moteur à quatre cylindres, on calcule COUPLE_BLOQUE tel qu'illustré à la figure 4.

Les critères, qui sont des variations du couple gaz, sont calculés de la manière suivante à chaque PMH :

Pour les moteurs équipés de 4 cylindres :

$$CRITERE\_1sur4 = C\_FILTRE\_2 - C\_FILTRE$$

$$CRITERE\_1sur2 = (C\_FILTRE\_2 + C\_FILTRE) - (C\_FILTRE\_1 + C\_FILTRE\_3)$$

Pour les moteurs équipés de 3 cylindres :

$$CRITERE\_1sur3 = C\_FILTRE\_1 - C\_FILTRE.$$

Pour tous les moteurs :

$$CRITERE\_ISOLE = C\_BLOQUE - C\_BRUT.$$

Ainsi, pour un moteur à quatre cylindres, si l'un des trois critères CRITERE_1sur4, CRITERE_1sur2, et CRITERE_ISOLE indique un défaut de combustion, alors un défaut de combustion est détecté. Pour un moteur à trois cylindres, si l'un des deux critères CRITERE_1sur3 et CRITERE_ISOLE indique un défaut de combustion, alors un défaut de combustion est détecté.

Le procédé selon l'invention présente ainsi de nombreux avantages.

Le diagnostic est compatible pour les moteurs équipés de trois ou de quatre cylindres.

Les dispersions de fabrication de l'ensemble « cible et capteur de signal dent » influencent très fortement la précision de l'estimation de régime et donc la fiabilité du diagnostic. Les critères « CRITERE_lsur4 » et « CRITERE_ISOLE » permettent d'annuler les effets de ces dispersions en soustrayant des estimations de couple qui sont estimées sur le même demi-tour de cible (qui « voient » donc le même défaut de cible). Cela permet d'avoir une détection plus robuste des ratés de combustion par rapport à un critère de diagnostic qui compare directement le couple du moteur à un seuil de détection sans s'affranchir de l'influence des défauts de la cible sur l'estimation de couple, une influence très dure à quantifier, mais que l'on sait impactante au niveau des résultats de critères de diagnostic.

En fonction de l'écartement des ratés de combustion le couple gaz d'un moteur se trouve perturbé. C'est alors que, même pour des conditions de fonctionnement du moteur stabilisées (REGIME et CHARGE_AIR stables), plus les ratés de combustion sont proches et plus le couple gaz est perturbé. De ce fait, il est important d'élaborer des critères de défaillance différents pour détecter les ratés de combustion qui surviennent tous les 4 PMH, tous les 3 PMH ou tous les 2 PMH, dans le but de pouvoir déterminer des seuils de détections différents puisque le comportement du couple gaz dépend aussi de la fréquence des ratés de combustion. Même remarque par rapport au CRITERE_ISOLE, qui est prévu pour l'apparition des ratés de combustion avec une fréquence faible.

**Revendications**

1. Procédé de détection des défauts de combustion survenant dans au moins un cylindre d'un moteur à combustion interne, lors d'au moins un cycle de combustion, le procédé opérant par analyse des valeurs d'une grandeur représentative du couple gaz déduite de la rotation du vilebrequin, l'analyse desdites valeurs étant effectuée à partir de valeurs filtrées du couple gaz, lorsqu'un fonctionnement stabilisé du moteur est établi, **caractérisé en ce que** :

   a. Pour un moteur à quatre cylindres, l'analyse des valeurs de couple gaz comprend l'analyse des trois différences de couple gaz suivantes, un défaut de combustion étant détecté si l'une au moins de ces différences dépasse une valeur seuil :

   - Une première différence égale, pour un point mort haut donné, à la différence entre la valeur du couple gaz filtrée deux points morts hauts avant le point mort haut donné et la valeur du couple gaz filtrée au point mort haut donné,
   - Une deuxième différence, égale, pour un point mort haut donné, à la différence entre 1) la somme de la valeur du couple gaz filtrée et de la valeur du couple gaz filtrée deux points morts haut avant le point mort haut donné, et 2) la somme de la valeur du couple gaz filtrée un point mort haut avant le point mort haut donné et de la valeur du couple gaz filtrée trois points morts hauts avant le point mort haut donné,
   - Une troisième différence, égale, pour un point mort haut donné, à la différence entre la dernière valeur du couple gaz filtrée avant un défaut de combustion détecté, et la valeur du couple gaz non filtrée, et

   b. Pour un moteur à trois cylindres, l'analyse des valeurs de couple gaz comprend l'analyse des deux différences de couple gaz suivantes, un défaut de combustion étant détecté si l'une au moins de ces différences dépasse une valeur seuil :

   - Une première différence, égale, pour un point mort haut donné, à la différence entre la valeur du couple gaz filtrée un point mort haut avant le point mort haut donné et la valeur du couple gaz filtrée au point mort haut donné,
   - Une deuxième différence, égale, pour un point mort haut donné, à la différence entre la dernière valeur du couple gaz filtrée avant un défaut de combustion détecté et la valeur du couple gaz non filtrée au point mort haut donné.

**2.** Procédé selon la revendication 1, **caractérisé en ce que** l'établissement d'un fonctionnement stabilisé est effectué en fonction du régime moteur et/ou du remplissage en air du moteur.

**3.** Procédé selon la revendication 2, **caractérisé en ce qu'**un fonctionnement stabilisé est établi pour un cycle de combustion donné lorsque la variation du régime moteur et/ou du remplissage en air du moteur par rapport au cycle précédent est inférieure à une valeur seuil.

**4.** Procédé selon l'une des revendications 1 à 3, **caractérisé en ce que** lorsqu'un fonctionnement stabilisé du moteur n'est pas établi, l'analyse des valeurs de couple gaz est stoppée jusqu'à ce qu'un fonctionnement stabilisé du moteur soit à nouveau établi.

**5.** Procédé selon l'une des revendications 1 à 4, **caractérisé en ce que** les valeurs filtrées du couple gaz sont obtenues par un filtrage du premier ordre.

**Patentansprüche**

**1.** Verfahren zum Detektieren von Verbrennungsfehlern, die in wenigstens einem Zylinder einer Brennkraftmaschine in wenigstens einem Verbrennungszyklus auftreten, wobei das Verfahren durch Analysieren von Werten einer Größe, die das Gasdrehmoment repräsentiert und aus der Drehung der Kurbelwelle abgeleitet wird, arbeitet, wobei die Analyse der Werte anhand von gefilterten Werten des Gasdrehmoments erfolgt, wenn eine stabile Funktion der Kraftmaschine hergestellt ist, **dadurch gekennzeichnet, dass**:

a. für einen Motor mit vier Zylindern die Analyse der Werte des Gasdrehmoments die Analyse der drei folgenden Gasdrehmoment-Differenzen umfasst, wobei ein Verbrennungsfehler detektiert wird, wenn wenigstens eine dieser Differenzen einen Schwellenwert überschreitet:

- eine erste Differenz, die für einen gegebenen oberen Totpunkt gleich der Differenz zwischen dem gefilterten Wert des Gasdrehmoments zwei obere Totpunkte vor dem gegebenen oberen Totpunkt und dem gefilterten Wert des Gasdrehmoments am gegebenen oberen Totpunkt ist,
- eine zweite Differenz, die für einen gegebenen oberen Totpunkt gleich der Differenz zwischen 1) der Summe des gefilterten Wertes des Gasdrehmoments und des gefilterten Wertes des Gasdrehmoments zwei obere Totpunkte vor dem gegebenen oberen Totpunkt und 2) der Summe des gefilterten Wertes des Gasdrehmoments einen oberen Totpunkt vor dem gegebenen oberen Totpunkt und des gefilterten Wertes des Gasdrehmoments drei obere Totpunkte vor dem gegebenen oberen Totpunkt ist,
- eine dritte Differenz, die für einen gegebenen oberen Totpunkt gleich der Differenz zwischen dem letzten gefilterten Wert des Gasdrehmoments vor einem detektierten Verbrennungsfehler und dem nicht gefilterten Wert des Gasdrehmoments ist, und

b. für einen Motor mit drei Zylindern die Analyse der Werte des Gasdrehmoments die Analyse der zwei folgenden Differenzen des Gasdrehmoments umfasst, wobei ein Verbrennungsfehler detektiert wird, wenn wenigstens eine dieser Differenzen einen Schwellenwert überschreitet:

- eine erste Differenz, die für einen gegebenen oberen Totpunkt gleich der Differenz zwischen dem gefilterten Wert des Gasdrehmoments einen oberen Totpunkt vor dem gegebenen oberen Totpunkt und dem gefilterten Wert des Gasdrehmoments an dem gegebenen oberen Totpunkt ist,
- eine zweite Differenz, die für einen gegebenen oberen Totpunkt gleich der Differenz zwischen dem letzten gefilterten Wert des Gasdrehmoments vor einem detektierten Verbrennungsfehler und dem nicht gefilterten Wert des Gasdrehmoments an dem gegebenen oberen Totpunkt ist.

**2.** Verfahren nach Anspruch 1, **dadurch gekennzeichnet, dass** die Herstellung einer stabilen Funktion in Abhängigkeit von dem Maschinenbetrieb und/oder der Luftfüllung der Maschine erfolgt.

**3.** Verfahren nach Anspruch 2, **dadurch gekennzeichnet, dass** eine stabilen Funktion für einen gegebenen Verbrennungszyklus hergestellt wird, wenn die Veränderung des Maschinenbetriebs und/oder der Luftfüllung der Maschine in Bezug auf den vorhergehenden Zyklus kleiner als ein Schwellenwert ist.

**4.** Verfahren nach einem der Ansprüche 1 bis 3, **dadurch gekennzeichnet, dass** dann, wenn eine stabile Funktion der Maschine nicht hergestellt wird, die Analyse der Werte des Gasdrehmoments angehalten wird, bis eine stabile Funktion der Maschine erneut hergestellt worden ist.

**5.** Verfahren nach einem der Ansprüche 1 bis 4, **dadurch gekennzeichnet, dass** die gefilterten Werte des Gasdrehmoments durch eine Filterung erster Ordnung erhalten werden.


**Claims**

**1.** Method for detecting combustion defects occurring in at least one cylinder of an internal combustion engine during at least one combustion cycle, the method operating by analysing the values of a representative quantity of the gas torque deduced from the rotation of the crankshaft, the analysis of the said values being carried out on the basis of filtered values of the gas torque when a stabilized operation of the engine is established, **characterized in that**:

    a. For a four-cylinder engine, the analysis of the gas torque values comprises the analysis of the following three gas torque differences, a combustion defect being detected if at least one of these differences exceeds a threshold value:

        - a first difference equal, for a given top dead centre, to the difference between the filtered gas torque value two top dead centres before the given top dead centre and the filtered gas torque value at the given top dead centre,
        - a second difference equal, for a given top dead centre, to the difference between 1) the sum of the filtered gas torque value and of the filtered gas torque value two top dead centres before the given top dead centre, and 2) the sum of the filtered gas torque value one top dead centre before the given top dead centre and of the filtered gas torque value three top dead centres before the given top dead centre,
        - a third difference equal, for a given top dead centre, to the difference between the last filtered gas torque value before a detected combustion defect and the non-filtered gas torque value, and

    b. For a three-cylinder engine, the analysis of the gas torque values comprises the analysis of the following two gas torque differences, a combustion defect being detected if at least one of these differences exceeds a threshold value:

        - a first difference equal, for a given top dead centre, to the difference between the filtered gas torque value one top dead centre before the given top dead centre and the filtered gas torque value at the given top dead centre,
        - a second difference equal, for a given top dead centre, to the difference between the last filtered gas torque value before a detected combustion defect and the non-filtered gas torque value at the given top dead centre.

**2.** Method according to Claim 1, **characterized in that** the establishment of a stabilized operation is effected as a function of the engine speed and/or of the filling of the engine with air.

**3.** Method according to Claim 2, **characterized in that** a stabilized operation is established for a given combustion cycle when the variation of the engine speed and/or of the filling of the engine with air with respect to the preceding cycle is below a threshold value.

**4.** Method according to one of Claims 1 to 3, **characterized in that** when a stabilized operation of the engine is not established, the analysis of the gas torque values is stopped until a stabilized operation of the engine is reestablished.

**5.** Method according to one of Claims 1 to 4, **characterized in that** the filtered values of the gas torque are obtained by a first-order filtering.

**Fig. 1**

**Fig. 2**

REGIME    CHARGE AIR

Vérification des conditions de fonctionnement du moteur

Conditions stabilisées ? — NON → Inhibition du diagnostic des ratés de combustion

OUI

C_BRUT → Filtrage du couple brut :
Calcul de
- C_FILTRE
- C_BLOQUE

4 cylindres ? — NON → Calcul de CRITERE_1 SUR 3 CRITERE_ISOLE

OUI

Calcul de
CRITERE_1 SUR 4
CRITERE_1 SUR 2
CRITERE_ISOLE

Comparaison des critères à des seuils de détection

**Fig. 3**

Couple

Cylindre 1  Cylindre 3  Cylindre 4  Cylindre 2  Cylindre 1  Cylindre 3  Cylindre 4  Cylindre 2

Blocage

——— C_BRUT
----- C_BLOQUE

Raté de combustion

Temps

**Fig. 4**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2684425
- FR 2851612
- EP 0532419 A
- FR 2768179
- FR 2757632
- FR 2757945
- FR 2844301